# EUROPÄISCHE PATENTANMELDUNG

(11) **EP 1 029 814 A1**
(43) Veröffentlichungstag der Anmeldung: **23.08.2000**
(21) Anmeldenummer: 00100961.2
(22) Anmeldetag: 19.01.2000
(51) Int. Cl.: B65G 23/24, B65G 23/30, F16H 3/72

(54) **Antreibseinheit für Förderanlagen mit Anfahrsteuerung oder -regelung**

(30) Priorität: 27.01.1999 DE 19903129
(71) Anmelder: Deutsche Montan Technologie GmbH, 45307 Essen (DE)
(72) Erfinder: Wölfle, Michael, 45968 Gladbeck (DE); Kaci, Vehip, 44793 Bochum (DE); Wahl, Marc, 45699 Herten (DE)

(57) **Zusammenfassung**

Antriebseinheit für Förderanlagen wie Gurtförderer mit mindestens einer Antriebsstation, die sich aus einem Motor, insbesondere Drehstromasynchronmotor, einer ersten Kupplung, einem Getriebe und, gegebenfalls, einer zweiten Kupplung sowie einer übergeordneten, auf die Antriebe und Kupplungen einwirkenden Steuer- oder Regelungseinheit zusammensetzt, wobei die mindestens eine Antriebsstation ein Trennelement beinhalten, das während des Anfahrvorganges auf das treibende Element der Förderanlage im Sinne einer Anlaufverzögerung einwirkt wobei das Trennelement aus einer hydrostatische Pumpe (10) mit Ölkreislauf und einer hydraulischen Steuerung oder Regelung für den Ölkreislauf besteht.

## Beschreibung

Die Erfindung betrifft eine Antriebseinheit für Förderanlagen mit Anfahrsteuerung oder -regelung gemäß dem Oberbegriff des Anspruchs 1.

Derartige Antriebseinheiten sind aus der DE 44 33 581 A1 bekannt. Sie bestehen aus einer oder mehreren Antriebsstationen, die sich aus einem Motor, einer Kupplung als Antriebsverbindung, einem Getriebe, einer weiteren Kupplung sowie einem als Kettenrad oder Antriebstrommel ausgeführten Abtrieb zusammensetzen. Der Antriebseinheit sind übergeordnete Steuer- oder Regeleinheiten zugeordnet. Die Antriebsstationen beinhalten vor, nach, oder in dem Getriebe ein Trennelement, das es gestattet, während des Anlaufvorganges der Förderanlage das Drehmoment und/oder die Abtriebsdrehzahl kontinuierlich oder stufenweise zu verändern.

Die Trennelemente sind als kraftschlüssig wirkende Kupplungen oder Bremsen vorgesehen. Sie erlauben den geregelten oder gesteuerten Förderanlauf von Antrieben mit einem ungeregelten Antriebsmotor. Hierbei wird bei eingeschalteten Motor durch das Trennelement ein Schlupf im Antriebsstrang realisiert, der ein Maß für die Abtriebsdrehzahl darstellt. Durch eine gesteuerte oder geregelte Drehmomentbeaufschlagung dieses Trennelementes wird Einfluß auf den Schlupf und damit auf die Abtriebsdrehzahl genommen. Dadurch entsteht während des Anlaufvorganges eine Verlustleistung, die zu Temperaturerhöhungen im System sowie zu Verschleiß führt.

Die Verlustleistung führt bei Reibkupplungen zunächst zu einer Erwärmung der an der kraftschlüssigen Drehmomentübertragung beteiligten Reibelemente. Durch Kontakt mit dem Getriebeöl wird die Energie nachfolgend an das Öl übertragen. Die Schwachstelle dieser Systeme ist die thermische Belastbarkeit der Reibelemente des Trennelementes. Während des Anlaufvorganges fällt die Wärmeabgabe durch den Wärmeübergang von der Kupplung auf das Öl geringer aus als die Wärmezunahme durch den Drehmoment behafteten Schlupf. Durch die begrenzte Wärmeaufnahmekapazität derartiger Trennelemente ist das Leistungsvermögen der Antriebseinheiten begrenzt. Das führt bei Anlaufbedingungen unter hoher äußerer Anlauflast sowie bei Ausführung mehrerer Anlaufvorgänge in kurzen Zeitabständen zu Funktionsstörungen bis hin zu Ausfällen der Antriebsstationen. Außerdem begrenzt der verlustleistungsbedingte Verschleiß reibschlüssig arbeitender Trennelemente die Gesamtlebensdauer derartiger Antriebseinheiten.

Der Erfindung liegt die Aufgabe zugrunde, ein Trennelement für Antriebseinheiten zu schaffen, das die Nachteile der kraftschlüssig arbeitenden Trennelemente wie Temperaturerhöhungen und Verschleiß zuverlässig vermeidet oder zumindest vermindert.

Diese Aufgabe wird durch die Merkmale des Anspruchs 1 gelöst.

Weiterbildungen erfolgen gemäß dem Merkmalen der Unteransprüche.

Die Erfindung beruht auf dem Grundgedanken, daß die Antriebsstationen der Antriebseinheit anstelle von kraftschlüssig arbeitenden Trennelementen mit einem Trennelement, das aus einer hydrostatischen Pumpe mit veränderbarem Ölkreislauf besteht, ausgestattet ist. Dieses Trennelement führt die bei dem Schlupf entstehende Verlustenergie direkt an das Öl ab. Dadurch wird eine Erwärmung des Trennelementes vermieden. Das Trennelement ist stärker thermisch belastbar als die bisher verwendeten Trennelemente.

In den Ölkreislauf greift eine hydraulische Steuer- oder Regeleinheit ein. Durch diese hydraulische Steuer- oder Regeleinheit kann entweder der Druck oder der Volumenstrom in dem Ölkreislauf verändert werden. Durch diese Veränderung wird das Drehmoment der hydrostatischen Pumpe derart verändert, daß die Pumpenwelle als Kupplung bzw. Bremse wirkt. Kann das Öl in den Ölkreislauf ungehindert fließen, ist der auftretende Schlupf maximal. Wird der Ölkreislauf durch Erhöhen des Druckes oder Begrenzung des Volumenstromes verändert, so verändert sich der Schlupf in der hydrostatischen Pumpe. Wird der Ölkreislauf gesperrt, ist die Pumpenwelle derart "eingekuppelt", daß ein Schlupf nicht mehr stattfindet.

Durch die Relativdrehzahl von Pumpenwelle und stehendem oder drehendem Pumpengehäuse kann der gewünschte Schlupf stufenlos eingestellt werden. Der an dem Trennelement auftretende Schlupf ist dabei umgekehrt proportional zur Abtriebsdrehzahl des Antriebsstranges während das Drehmoment proportional zum Drehmoment des am Abtrieb der Antriebsstation angeordneten Kettenrades oder der Antriebstrommel der Förderanlage ist. Beim Einschalten des Motors ist das von der hydrostatischen Pumpe übertragene Drehmoment Null.

Die hydrostatische Pumpe kann in das Getriebe der Antriebseinheit integriert sein oder gemäß einer Ausführungsvariante in dem Antriebsstrang angeordnet sein.

Unter hydrostatischen Pumpen werden - im Sinne der Erfindung - alle nach dem Verdrängerprinzip arbeitenden Pumpen verstanden. Es werden bevorzugt Axial- oder Radialkolbenpumpen verwendet. Bevorzugt wird das Trennelement mit feststehendem Pumpengehäuse ausgeführt. Das Pumpengehäuse kann jedoch auch drehbar ausgeführt sein. In jedem Fall wird der erforderliche Schlupf durch die Relativdrehzahl zwischen Pumpenwelle und stehendem oder drehendem Pumpengehäuse realisiert.

Gemäß einer Ausführungsform der Erfindung wird der Anlaufvorgang durch Beeinflussung des hydraulischen Druckes des Ölkreislaufes der hydrostatischen Pumpe gesteuert oder geregelt. In dem Ölkreislauf ist ein Druckeinstellventil angeordnet. Der im Ölkreislauf herrschende Druck ist proportional zum Drehmoment des Antriebsstranges und damit proportional zu dem Drehmoment des auf das Kettenrad oder die Antriebstrommel wirkenden Abtriebs des Antriebsstranges. Durch Ansteuerung des Druckeinstellventils mit der hydraulischen Steuer- oder Regeleinheit wird das Drehmoment entsprechend eines vorgegebenen Zeitverlaufes verändert bzw. während des Anlaufes konstant gehalten. Durch Messen der Drehzahl des Kettenrades oder der Antriebstrommel kann mit der hydraulischen Steuer- oder Regeleinheit eine Regelung des Anlaufvorganges vorgenommen werden.

Durch Anordnung eines Druckbegrenzungsventils in dem Ölkreislauf wird der maximal mögliche hydraulische Druck begrenzt.

Gemäß einer weiteren Ausführung der Erfindung kann der Anlauf durch Beeinflussung des Volumenstromes des Ölkreislaufes gesteuert oder geregelt werden. Der Volumenstrom des Ölkreislaufes ist proportional zum Schlupf in dem Antriebsstrang und damit umgekehrt proportional zu der Abtriebsdrehzahl. Durch Ansteuern des Volumenstromeinstellventils wird der Volumenstrom und damit die Abtriebsdrehzahl entsprechend eines vorgegebenen Zeitverlaufes gesteuert oder geregelt.

Gemäß einer weiteren Ausbildung der Erfindung ist das Hubvolumen der hydrostatischen Pumpe verstellbar ausgeführt. Bei dieser Ausführungsform kann durch Veränderung der Hubvolumenverstellung während des Anlaufvorganges das im Ölkreislauf umgewälzte Ölvolumen in Abhängigkeit von dem erforderlichen Schlupf verringert werden. Dadurch ist eine Verbesserung des thermischen Haushaltes und der hydraulischen Arbeitsweise des Trennelementes möglich.

Das Öl für den Ölkreislauf der hydrostatischen Pumpe kann aus dem Getriebeöl des Getriebes des Antriebsstranges entnommen werden. Es ist jedoch genauso möglich, einen Ölkreislauf mit einem separaten Öltank vorzusehen.

Die vorgenannten, sowie die beanspruchten und in den Ausführungsbeispielen beschriebenen, erfindungsgemäß zu verwendenden Bauteile unterliegen hinsichtlich ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der - beispielhaft - bevorzugte Ausführungsformen des Trennelementes dargestellt sind. In der Zeichnung zeigen:
- Fig. 1: eine schematische Darstellung einer Förderanlage mit einer Antriebseinheit bestehend aus zwei Antriebsstationen mit in die Getriebe integrierten Trennelementen;
- Fig. 2: die Anordnung einer hydrostatischen Pumpe in dem Getriebe einer Antriebsstation;
- Fig. 3: zwei verschiedene Anordnungsmöglichkeiten der hydrostatischen Pumpe in der Antriebsstation und in
- Fig. 4: schematische Darstellungen der Schaltlogik der hydraulischen Ansteuerung des Ölkreislaufes.

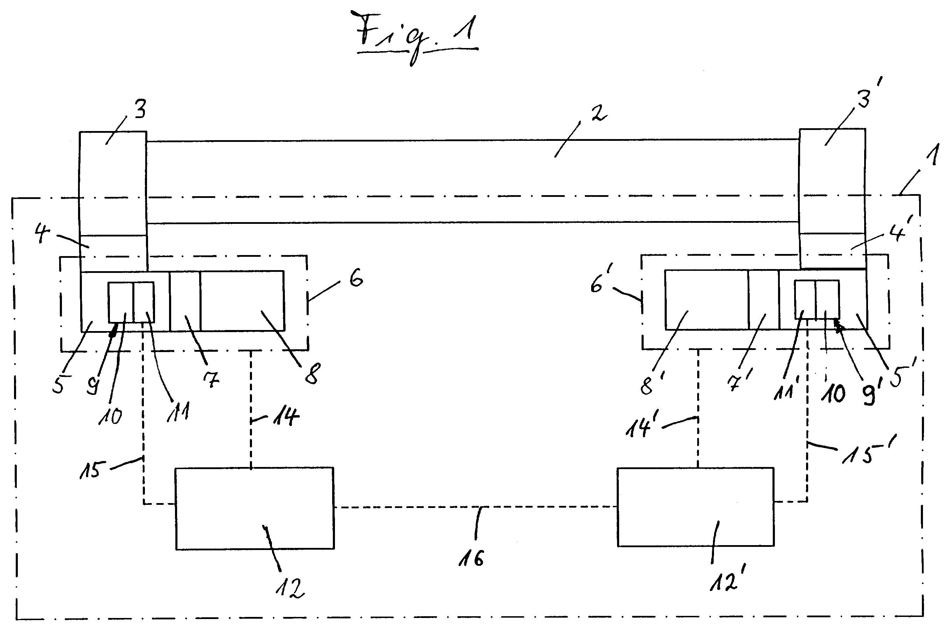

Figur 1 zeigt ein Schema einer Antriebseinheit 1 für ein Fördermittel 2, wie einem Förderband, die aus zwei Antriebsstationen 6 und 6' besteht. Über jeweils eine (zweite) Kupplung 4 und 4' erfolgt die Krafteinleitung (Antriebsrad) auf das Fördermittel 2. Die Antriebsstationen 6 und 6' setzen sich jeweils aus einem Motor 8 und 8', einer (ersten) Kupplung 7 und 7' und einem Getriebe 5 und 5' zusammen. In die Getriebe 5 und 5' sind Trennelemente 9 und 9' eingebaut, die aus jeweils einer Pumpe 10 und 10' und einer hydraulischen Steuerung 11 und 11' bestehen. Jeder Antriebsstation 6 und 6' ist eine Steuer- oder Regeleinheit 12 und 12' zugeordnet. Die Steuer- oder Regeleinheiten 12 und 12' können in die Getriebe 5 und 5' der Antriebsstationen 6 und 6' integriert sein. Über eine Meßwertübertragungsleitungsleitung 14 werden alle für einen kontrollierten Anlauf erforderlichen Meßwerte übertragen. Dies sind in erster Linie der Schlupf des Trennelementes 9 und 9' bzw. die Drehzahlen der Motoren 8 und 8' und der Krafteinleiter 3 und 3'. Darüberhinaus werden die Signale zur Überwachung der Antriebsstationen 6 und 6' durch die Meßwertübertragungsleitung 14 und 14' übertragen. Die Ansteuerung der Schalt- und/oder Regelventile der hydraulischen Steuerung 11 erfolgt über eine Ansteuerungsleitung 15 durch die elektrische Steuer- oder Regeleinheit 12 und 12'. Durch eine Datenübertragungsleitung 16 ist die Kommunikation zwischen den Steuer- oder Regeleinheiten 12 und 12' sichergestellt, so dag die Anlaufvorgänge der Antriebsstationen unter Berücksichtigung der gegenseitigen Wechselwirkung erfolgen können.

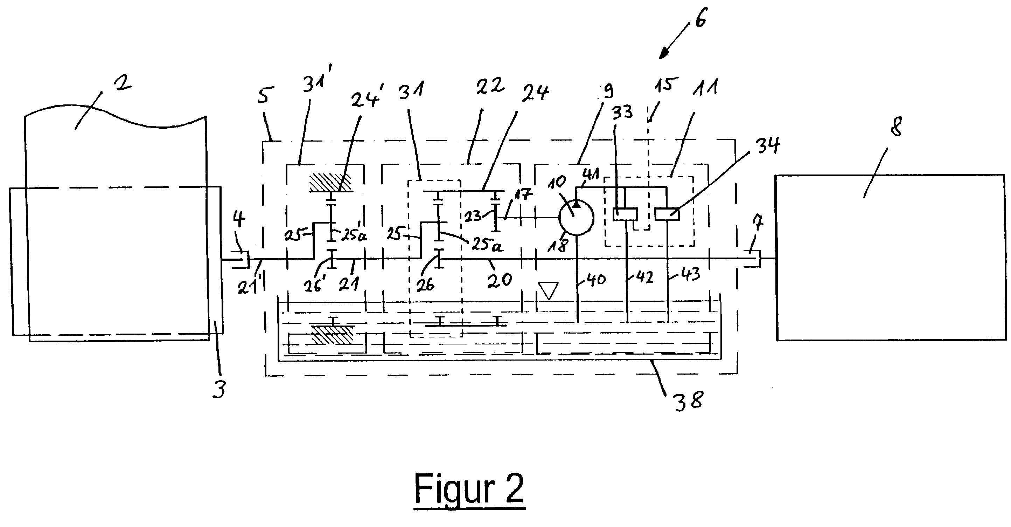

In der Figur 2 ist die Anordnung eines Trennelementes 9 in dem Getriebe 5 dargestellt. Das Getriebe 5 besteht aus einer ersten und einer zweiten Getriebestufe 31 und 31' in der Form je eines Planetenradgetriebes. Der Motor 8 ist über die (erste) Kupplung 7 mit einer Eingangswelle 20 verbunden, die als Sonnenradwelle mittels eines Sonnenrades 26 auf ein ein drehbar gelagertes Hohlrad 24 aufweisendes Überlagerungsgetriebe 22, welches u.a. diese erste Getriebestufe umfaßt, wirkt. Das Hohlrad 24 des Überlagerungsgetriebes 22 ist zum einen Bestandteil der ersten Getriebestufe 31 und wirkt über ein Planetenrad 25a auf den Planetenradträger 25 der mit der Ausgangswelle 21 verbunden ist. Die Ausgangswelle 21 trägt direkt auf das Sonnenrad 26' der zweiten Getriebestufe 31'. Das Hohlrad 24' der zweiten Getriebestufe 31' ist feststehend. Die Abtriebsverbindung erfolgt über das Sonnenrad 26, das Planetenrad 25a mit Planetenträger 25, das Sonnenrad 26', das Planetenrad 25a', mit Planetenradträger 25 und die Ausgangswelle 21', die über die (zweite) Kupplung 4 und den Krafteinleiter 3 mit dem Fördermittel 2 antriebsverbunden ist.

Das Trennelement 9 besteht aus der Pumpe 10 in Gestalt einer Hydraulikpumpe mit einer Pumpenantriebswelle 17 und einem Pumpengehäuse 18. Durch Leitungen 40, 41, 42 und 43 wird eine Ölkreislauf über einen Getriebeöltank 38 ermöglicht. Durch die hydraulische Steuerung 11 wird ein Druckeinstellventil 33 in der Leitung 42 mit der Ansteuerung 15 von der in Fig. 2 nicht dargestellten Steuer- oder Regeleinheit 12 angesteuert. Der maximal in dem Ölkreislauf entstehende hydraulische Druck wird durch eine Druckbegrenzungsventil 34 in der Bypassleitung 43 begrenzt.

Die Pumpenwelle 17 ist über ein Ritzel 23 mit dem Hohlrad 24 des Überlagerungsgetriebes 22 antriebsverbunden. Das Pumpengehäuse 18 ist mit dem Gehäuse des Getriebes 5 verbunden und somit feststehend bzw. nicht drehbar.

Der Anlaufvorgang wird durch den Eingriff des Trennelementes 9 in das Überlagerungsgetriebe 22 wie folgt realisiert. Beim Anfahren wird durch die Ansteuerung 15 der Ölkreislauf des Trennelementes 9 durch Öffnen des Druckeinstellventils 33 drucklos und damit das Hohlrad 24 drehmomentfrei geschaltet. Der Motor 8 beschleunigt deshalb praktisch lastfrei auf seine Nenndrehzahl.

Aufgrund des Anlaufens des Motors 8 beginnt das Hohlrad 24 des Überlagerungsgetriebes 22 sich zu drehen während der Planetenradträger 25 (bei laufendem Planetenrad 25a) stehenbleibt. Dabei treibt das Hohlrad 24 die Pumpenwelle 17 der Pumpe 10 über das Ritzel 23 an. Der dadurch in Gang gesetzte Ölkreislauf der Pumpe 10 über die Leitungen 40, 41 und 42 und den Getriebeöltank 38 ist während dieser Anlaufphase - wie erwähnt - drucklos. Sobald der Motor 8 seine Nenndrehzahl erreicht hat, schaltet die Ansteuerung 15 das Druckregelventil 33 in der Weise zum daß die Pumpe 10 ein dem Druck proportionales Drehmoment an der Pumpenwelle 17 und dem Ritzel 23 aufbaut. Das so von der Pumpe 10 erzeugte Drehmoment bremst das Hohlrad 24 des Überlagerungsgetriebes 22 deshalb allmählich ab. Je weiter das Hohlrad 24 verzögert wird, desto mehr beschleunigt der der Planetenradträger 25 des Überlagerungsgetriebes 22. Die Beschleunigung der Abtriebswelle 21 ist also der Verzögerung des Hohlrades 24 proportional. Auf diese Weise kann mit der Pumpe 10 das Hohlrad 24 mit einem Drehmoment beaufschlagt und gewünschtenfalls festgesetzt werden. Wenn die Pumpe 10 und somit das Hohlrad 24 stehen, fliegt die gesamte Energie des Antriebsmotors über die Abtriebswelle 21 und die Getriebestufe 31' zu dem Krafteinleiter 3. Der Förderanlauf ist vollzogen.

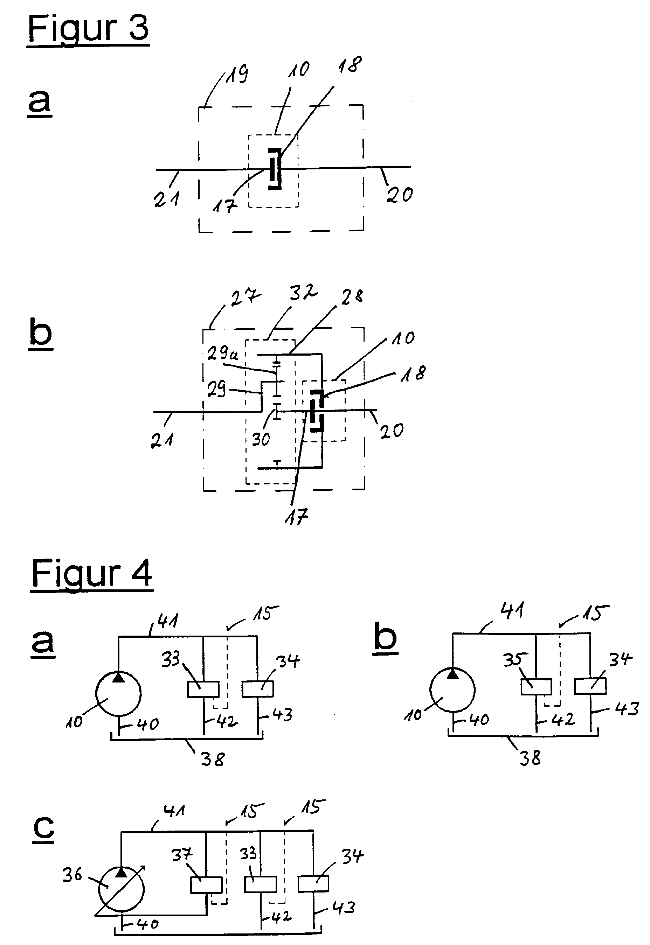

Die Figur 3 zeigt zwei verschiedene Anordnungsmöglichkeiten der Pumpe 10 in der Antriebsstation 6. In Figur 3a ist eine direkte Einbindung in den Antriebsstrang 19 dargestellt. Dies kann beispielsweise anstelle der Kupplung 7 zwischen Motor 8 und Getriebe 5 erfolgen. Der Ölkreislauf ist nicht dargestellt. Die Pumpe 10 mit der Pumpenwelle 17 und dem Pumpengehäuse 18 arbeitet kupplungsähnlich. D. h. sowohl die Pumpenwelle 17 als auch das Pumpengehäuse 18 sind drehbar. Die Eingangswelle 20 des Antriebsstranges 19 ist mit dem Pumpengehäuse 18 und die Ausgangswelle 21 ist mit der Pumpenwelle 17 verbunden. Wie in der Erläuterung zu Figur 2 ausgeführt, kann die Pumpe 10 stufenlos zwischen Drehmomentfreiheit und zu einem Festsetzen betrieben werden.

Bei dieser Anordnung ist eine vertauschte Zuordnung, d. h. eine Verbindung der Eingangswelle 20 mit der Pumpenwelle 17 und der Ausgangswelle 21 mit dem Pumpengehäuse ebenfalls möglich.

In der Ausführungsform gemäß Figur 3b ist die Pumpe 10 in einem Überlagerungsgetriebe 27 mit Planetengetriebestufe 32 angeordnet. Die Eingangswelle 20 des Überlagerungsgetriebes 27 wirkt sowohl auf die Pumpenwelle 17 als auch auf das Sonnenrad 30 der Planetengetriebestufe 32. Das Pumpengehäuse 18 ist drehfest mit dem Hohlrad 28 der Planetengetriebestufe 32 verbunden. Die Abtriebswelle 21 ist mit dem Planetenradträger 29 mit dem Planetenrad 29a verbunden. Zu Beginn des Anlaufvorganges dreht die Pumpe 10 drehmomentfrei, da der Ölkreislauf zunächst drucklos geschaltet ist. Die Pumpenwelle 17 dreht sich gegenläufig zu dem Pumpengehäuse 18 und dem Hohlrad 28 des Überlagerungsgetriebes 27. Die Abtriebswelle 21, die mit dem Planetenradträger 25 und den Planetenrädern 29a verbunden ist, steht. Durch Druckaufbau in dem Ölkreislauf wird ein Drehmoment erzeugt und dadurch die die Drehzahldifferenz zwischen der Pumpenwelle 17 und dem Pumpengehäuse 18 verringert und somit die Drehzahldifferenz zwischen Sonnenrad 30 und Hohlrad 28 des Planetengetriebes 32 vergrößert. Die Abtriebswelle 21 des Überlagerungsgetriebes 27 wird daher beschleunigt. Durch weitere Erhöhung des Druckes des Ölkreislaufes und dadurch bedingte Erhöhung des Drehmomentes ist der Anlaufvorgang dann beendet, wenn alle drehbaren Elemente des Überlagerungsgetriebes 27 und der Pumpe 10 die gleiche Drehzahl aufweisen. Die Drehzahl der Abtriebswelle 21 entspricht nun der Drehzahl der Eingangswelle 20.

Die Figur 4 zeigt drei Ausführungsvarianten der Schaltlogik der hydraulischen Ansteuerung 15 des Ölkreislaufes des Trennelementes. Die Pumpe 10 bzw. die Verstellpumpe 36 fördert über die Leitungen 40, 41 und 42 das Öl aus dem Getriebeöltank 38 in einen offenen Ölkreislauf. Der maximal in dem Ölkreislauf entstehende hydraulische Druck ist über ein Druckbegrenzungsventil 34 in der Leitung 43 begrenzt.

Figur 4a zeigt die Schaltlogik gemäß der Figur 2. Der durch die Pumpe geförderte Volumenstrom fließt über Leitung 40, 41 und 42 durch ein Druckeinsteilventil 33, das über die Ansteuerung 15 angesteuert wird. Durch Veränderung des hydraulischen Druckes in dem Ölkreislauf wird das an der Pumpenwelle wirksame Drehmoment verändert.

Gemäß Fig. 4b fließt das durch die Pumpe 10 geförderte Öl durch ein Volumenstromeinsteilventil 35 mit einer Ansteuerung 15. Durch Veränderung des Volumenstroms ist eine Veränderung des an der Pumpenwelle wirksamen Drehmomentes und damit eine Beeinflussung der Pumpendrehzahl möglich.

In der Figur 4c ist eine Verstellpumpe 36 mit einem Verstellventil 37 dargestellt. Durch das Verstellventil 37 kann das Verhältnis von Pumpendrehzahl zu Volumenstrom während des Anfahrvorganges zusätzlich verändert werden. Dadurch kann die Leistung der Verstellpumpe 36 während des Anlaufvorganges angepaßt und damit die thermische Belastung verringert werden.

### Bezugszeichenliste

- 1: Antriebseinheit
- 2: Fördermittel
- 3, 3': Krafteinleiter
- 4, 4': zweite Kupplung
- 5, 5': Getriebe
- 6, 6': Antriebsstation
- 7, 7': erste Kupplung
- 8, 8': Motor
- 9: Trennelement
- 10: Pumpe
- 11: hydraulische Steuerung
- 12, 12': Steuer- oder Regeleinheit
- 14, 14': Meßwertübertragungsleitungs
- 15, 15': Ansteuerungsleitung
- 16: Datenübertragungsleitung
- 17: Pumpenantriebswelle
- 18: Pumpengehäuse
- 19: Antriebsstrang
- 20: Eingangswelle
- 20a: Sonnenrad
- 21: Ausgangswelle
- 21a: Sonnenrad
- 22: Überlagerungsgetriebe
- 23: Ritzel
- 24: Hohlrad
- 25, 25': Planetenradträger
- 25a, 25'a: Planetenrad
- 26: Sonnenrad
- 27: Überlagerungsgetriebe
- 28: Hohlrad
- 29: Planetenradregler
- 29a: Planetenrad
- 30: Sonnenradwelle
- 31: erste Getriebestufe
- 31': zweite Getriebestufe
- 32: Planetengetriebestufe
- 33: Druckeinstellventil
- 34: Druckbegrenzungsventil
- 35: Volumenstromeinstellventil
- 36: Verstellpumpe
- 37: Verstellventil
- 38: Getriebeöltank
- 40: Leitung
- 41: Leitung
- 42: Leitung
- 43: Leitung

## Patentansprüche

1. Antriebseinheit für Förderanlagen wie Gurtförderer mit mindestens einer Antriebsstation, die sich aus einem Motor, insbesondere Drehstromasynchronmotor, einer ersten Kupplung, einem Getriebe und, gegebenfalls, einer zweiten Kupplung sowie einer übergeordneten, auf die Antriebe und Kupplungen einwirkenden Steuer- oder Regelungseinheit zusammensetzt, wobei die mindestens eine Antriebsstation ein Trennelement beinhalten, das während des Anfahrvorganges auf das treibende Element der Förderanlage im Sinne einer Anlaufverzögerung einwirkt,
**dadurch gekennzeichnet,** daß
das Trennelement aus einer hydrostatische Pumpe (10) mit Ölkreislauf und einer hydraulischen Steuerung oder Regelung für den Ölkreislauf besteht.

2. Antriebseinheit nach Anspruch 1, dadurch gekennzeichnet, daß die hydrostatische Pumpe (10) in das Getriebe (5) integriert ist.

3. Antriebseinheit nach Anspruch 1, dadurch gekennzeichnet, daß die Pumpe (10) in einem Antriebsstrang (19) angeordnet ist.

4. Antriebseinheit nach mindestens einem der Ansprüche 1 bis 3, dadurch gekennzeichnet, daß in dem Ölkreislauf ein Druckeinstellventil (30) angeordnet ist.

5. Antriebseinheit nach Anspruch 1 bis 4, dadurch gekennzeichnet, daß in dem Ölkreislauf ein Druckbegrenzungsventil (34) angeordnet ist.

6. Antriebseinheit nach Anspruch 1 bis 5, dadurch gekennzeichnet, daß in dem Ölkreislauf ein Volumenstromeinsteilventil (35) angeordnet ist.

7. Antriebseinheit nach Anspruch 1 bis 6, dadurch gekennzeichnet, daß die Pumpe (10) eine Hubvolumenverstellung aufweist.

8. Antriebseinheit nach einem der Ansprüche 1 bis 7, dadurch gekennzeichnet, daß die Pumpe (10) mit dem Getriebeöltank (38) des Getriebes (5) der Antriebsstation (6) verbunden ist.

9. Antriebseinheit nach einem der Ansprüche 1 bis 8, dadurch gekennzeichnet, daß die Pumpe (10) mit einem separaten Öltank verbunden ist.

10. Verfahren zum geregelten oder gesteuerten Anlauf von Antrieben für Fördermittel mit einem ungeregelten Antriebsmotor, bei dem durch ein oder mehrere Trennelemente ein Schlupf in dem Antriebsstrang während des Anlaufvorganges realisiert wird,
**dadurch gekennzeichnet,**
daß eine hydrostatische Pumpe mit einem Ölkreislauf zwischen dem Antriebsmotor und dem Krafteinleiter betrieben wird und der Ölkreislauf durch ein Druckeinstellventil oder ein Volumenstromeinstellventil während des Anlaufvorganges derart gedrosselt wird, daß die Pumpe allmählich zum Stillstand kommt, während der Krafteinleiter ein zunehmendes Antriebsmoment erhält.
